# EUROPÄISCHE PATENTSCHRIFT

(11) **EP 0 655 846 B1**
(45) Veröffentlichungstag und Bekanntmachung des Hinweises auf die Patenterteilung: **06.06.2001**
(21) Anmeldenummer: 94116440.2
(22) Anmeldetag: 19.10.1994
(51) Int. Cl.: H04L 5/14

(54) **Steuerung der Übertragungsvorrichtung in Leitungsübertragung**
Control of transmission device in line communication
Commande du dispositif de transmission dans une transmission par ligne

(30) Priorität: 27.11.1993 DE 4340435
(43) Veröffentlichungstag der Anmeldung: 31.05.1995
(73) Patentinhaber: Volkswagen Aktiengesellschaft, 38436 Wolfsburg (DE)
(72) Erfinder: Schwäbe, Karl-Heinz, D-38444 Wolfsburg (DE)

(56) Entgegenhaltungen:
- EP-A- 0 400 824
- US-A- 4 912 724
- PATENT ABSTRACTS OF JAPAN vol. 17 no. 104 (E-1328) ,3.März 1993 & JP-A-04 292040 (FUJITSU LTD.) 16.Oktober 1992,

## Beschreibung

Die Erfindung betrifft eine Signalübertragungsvorrichtung gemäß dem Oberbegriff des Patentanspruchs 1. Dabei kann es sich um die Übertragung von Daten oder anderen Informationen handeln, die in Form elektrischer Signale über die Vorrichtung übertragen werden sollen.

Bei Signalleitungen ist man aus Gründen der besseren Ausnutzung daran interessiert, über die betreffende Leitung in beiden Richtungen Signale zu übertragen. Außerdem ist es häufig erforderlich, im Zuge der Signalleitung eine Einrichtung vorzusehen, die in Abhängigkeit von ihr zugeführten Steuersignalen die Signalübertragung zuläßt oder unterbindet.

Aus der US Patentschrift US 4,912,724 ist eine Einrichtung zur bidirektionalen Datenübertragung auf einer Signalleitung bekannt, welche an ihren Enden mit jeweils einer Sende- und Empfängeranordnung verbunden ist. Zum Unterbinden der Signalübertragung in eine Richtung, wenn in der anderen Richtung Daten übertragen werden, ist dem Treiber einer der Sendeeinrichtungen ein Widerstand zugeordnet, der als ein paralleler Abschlußwiderstand dient, wenn in Richtung seines Endes Daten übertragen werden.

Eine technisch relativ einfache Möglichkeit bietet der Einsatz von elektromechanischen oder elektronischen Schaltern, die die Signalübertragung gleichsam durch physische Unterbrechung der Leitung unterbinden. Gerade in der modernen Technik sind elektromechanische Schalter aufgrund ihrer erheblichen Schaltzeiten und der Gefahr des Prellens bei Schaltvorgängen jedoch häufig ungeeignet. Elektronische Schalter haben den Nachteil, daß sich infolge von Bahnwiderständen und Sättigungsspannungen Spannungsabfälle ergeben können, die den Signalpegel nachteilig verändern.

Der Erfindung liegt die Aufgabe zugrunde, eine gattungsgemäße Signalübertragungsvorrichtung zu schaffen, deren die Signalübertragung zulassende oder unterbindende Einrichtung die beschriebenen Nachteile der beiden mit Schaltern arbeitenden Vorrichtungen vermeidet.

Die erfindungsgemäße Lösung besteht in den Merkmalen des Hauptanspruchs, eine vorteilhafte Ausbildung der Erfindung beschreibt der Unteranspruch.

Schlagwortartig kann man die Erfindung dahingehend charakterisieren, daß die Einrichtung zur wahlweisen Unterbindung der Signalübertragung eine logisch trennbare Verbindung darstellt, die weniger eine direkte Signalübertragung zuläßt als vielmehr eine "inhaltliche" Verbindung mit Übertragung des Nachrichteninhalts der Signale darstellt. Dadurch werden auch die bei elektronischen Schaltern auftretenden Spannungsabfälle mit ihren Nachteilen für den Signalpegel vermieden.

Wie auch Anspruch 2 zum Ausdruck bringt, der sich auf eine vorteilhafte Ausbildung der definierten Einrichtung bezieht, kann diese in vorteilhafter Weise aus handelsüblichen Schaltungsbausteinen aufgebaut sein.

Betrachtet man die ein Ausführungsbeispiel der Erfindung darstellende Zeichnung, so erkennt man zwischen den beiden Sender-Empfänger-Anordnungen 1 und 2 die Signalübertragungsleitung 3, in deren Zuge die allgemein mit 4 bezeichnete Einrichtung zur wahlweisen Zulassung oder Unterbindung der Signalübertragung liegt.

Diese Einrichtung enthält die beiden weiteren Sender-Empfänger-Anordnungen 5 und 6, von denen die Anordnung 5 gleichsam ein Abbild der Anordnung 2 und die Anordnung 6 ein Abbild der Anordnung 1 darstellt. Den beiden weiteren Sender-Empfänger-Anordnungen 5 und 6 ist die elektronische Steuerung 7 zugeordnet, die als wesentliche Bestandteile das UND-Gatter 8, das der Anordnung 5 zugeordnet ist, und das der Anordnung 6 zugeordnete UND-Gatter 9 sowie den Laufzeiten der Signale in den weiteren Anordnungen 5 und 6 Rechnung tragende Abschaltverzögerungen 10 und 11 nebst einer bestimmten Verschaltung enthält. Dabei ist das UND-Gatter 8 dadurch der Anordnung 5 zugeordnet, daß sein Signalausgang mit dem Empfangseingang (Ansteuereingang) 12 der Anordnung 5 verbunden ist; demgemäß ist der Ausgang des UND-Gatters 9 zum Empfangseingang (Ansteuereingang) 13 der Anordnung 6 geführt. In dem gezeigten Ausführungsbeispiel sind die Eingänge 12 und 13 Basisanschlüsse von Transistoren.

Der Ausgang jedes der UND-Gatter 8 und 9 steht über eine der Abschaltverzögerungen 10 und 11 auch in Verbindung mit einem invertierenden Eingang 14 bzw. 15 des jeweils anderen UND-Gatters. Diese UND-Gatter weisen ferner - im Hinblick auf die Transistoren in den Bausteinen 5 und 6 invertierende - Eingänge 16 und 17 auf, die gleichsam über Kreuz mit dem Sendeausgang 18 bzw. 19 jeweils einer der weiteren Sender-Empfänger-Anordnungen 5 und 6 verbunden sind.

Schließlich sind dritte Eingänge 20 und 21 der UND-Gatter 8 und 9 über Steuerleitungen 22 und 23 mit den Steuersignalen beaufschlagt.

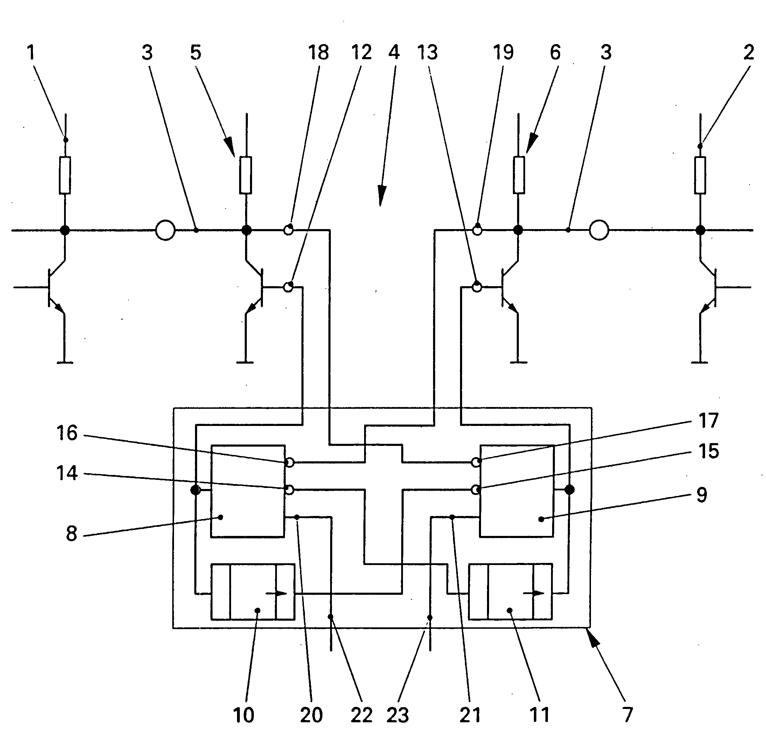

Betrachtet man beispielsweise den Fall des Senderbetriebs in der Figur von rechts nach links, wobei also die Anordnung 2 als Sender und die Anordnung 6 als Empfänger und Sender sowie die Anordnung 5 als Empfänger und Sender sowie die Anordnung 1 als Empfänger arbeiten, so gelangen die bei 19 abgegriffenen Sendesignale auf den Eingang 16 des UND-Gatters 8, dessen Eingang 20 Steuersignale zugeführt werden. Am Ausgang des anderen UND-Gatters 9 stehen keine das UND-Gatter 8 sperrenden Signale an, so daß auch eine dritte Bedingung für das Durchschalten des UND-Gatters 8 erfüllt ist. An seinem Ausgang erscheinen demgemäß durch die Sendesignale der weiteren Anordnung 6 hervorgerufene Empfangssignale, die zum Empfangseingang 12 der weiteren Sender-Empfänger-Anordnung 5 geleitet werden. Diese Ausgangssignale gelangen jedoch auch über die Abschaltverzögerung 10 zum Eingang 15 des anderen UND-Gatters 9, so daß sie dieses blockieren. Am Ausgang dieses UND-Gatters 9 erscheinen demgemäß keine Signale, wodurch eine Rückwirkung auf die weitere Sender-Empfänger-Anordnung 6 verhindert wird. Dadurch ist eine gegenseitige Beeinflussung der beiden Übertragungszüge, und zwar infolge der Wirkung der Abschaltverzögerung 10 unter Berücksichtigung der in den verschiedenen Bausteinen auftretenden Verzögerungen, gewährleistet.

Das Entsprechende gilt für die Signalübertragung in der Figur von links nach rechts. Die weiteren Sender-Empfänger-Anordnungen übertragen die ihnen bei 18 und 19 zugeführten Signale zu der jeweiligen Anordnung 1 bzw. 2.

Eine gewünschte Unterbindung der Signalübertragung kann durch entsprechende Steuersignale auf den Steuerleitungen 22 und 23 vorgenommen werden.

## Patentansprüche

1. Signalübertragungsvorrichtung mit einer Signalübertragungsleitung, deren Enden mit jeweils einer Sender-Empfänger-Anordnung für die Signale verbunden sind und in deren Verlauf eine in Abhängigkeit von ihr zugeführten Steuersignalen die Signalübertragung zulassende oder unterbindende Einrichtung vorgesehen ist, dadurch gekennzeichnet, daß die Einrichtung (4) zwischen zwei weiteren, ständig mit der Leitung (3) verbundenen Sender-Empfänger-Anordnungen (5, 6) eine mit dem Steuersignalen beaufschlagte Verknüpfungsschaltung enthält mit Mitteln (8, 9, 10, 11) zur Gewinnung von Signalen für die Unterbindung des Empfängerbetriebs der jeweils im Sendebetrieb arbeitenden weiteren Sender-Empfänger-Anordnung (5, 6) aus den Empfangssignalen der jeweils im Empfangsbetrieb arbeitenden weiteren Sender-Empfänger-Anordnung (5, 6).

2. Vorrichtung nach Anspruch 1, dadurch gekennzeichnet, daß die Verknüpfungsschaltung zwei UND-Verknüpfungen (8, 9) enthält, deren Ausgänge individuell mit einem Empfangseingang (12, 13) einer zugeordneten der weiteren Sender-Empfänger-Anordnungen (5, 6) verbunden sind, während ein erster Eingang (16, 17) jeder UND-Verknüpfung (8, 9) mit dem Sendeausgang der jeweils nicht zugeordneten weiteren Sender-Empfänger-Anordnung (5, 6), dagegen ein zweiter Eingang (14, 15) jeder UND-Verknüpfungen (8, 9) über eine Abschaltverzögerung (10, 11) mit dem Ausgang der jeweils anderen UND-Verknüpfung (8, 9) verbunden ist und dritte Eingänge (20, 21) beider UND-Verknüpfungen (8, 9) mit den Steuersignalen beaufschlagt sind.

## Claims

1. Signal transmitting apparatus comprising a signal transmitting line whose ends are connected in each case to a transmitter-receiver arrangement for the signals and in the run of said line is provided a device which permits or prevents the transmission of signals depending upon the control signals received by said device, characterised in that the device (4) comprises between two further transmitter-receiver arrangements (5,6), which are permanently connected to the line (3), a connection circuit which is influenced by the control signals with means (8, 9, 10, 11) for obtaining signals for preventing the receiver operation of the respective other transmitter-receiver arrangement (5,6) operating in the transmission operation from the receiving signals of the respective other transmitter-receiver arrangement (5,6) operating in the receiving operation.

2. Apparatus according to claim 1, characterised in that the connection circuit comprises two AND-couplings (8, 9) whose outputs are connected individually to a receiving input (12, 13) of one allocated of the other transmitter-receiver arrangements (5, 6), whilst a first input (16, 17) of each AND-coupling (8,9) is connected to the transmission output of the respective non-allocated other transmitter-receiver arrangement (5,6), on the other hand a second input (14, 15) of each AND-couplings (8,9) is connected via a turn-off delay (10, 11) to the output of the respective other AND-coupling (8,9) and third inputs (20, 21) of both AND-couplings (8,9) are influenced by the control signals.

## Revendications

1. Dispositif de transmission de signaux, comportant une ligne de transmission de signaux qui est reliée par chacune de ses extrémités à un dispositif émetteur-récepteur pour les signaux, et sur laquelle est prévu un dispositif autorisant ou inhibant la transmission de signaux en fonction de signaux de commande qui lui sont transmis, caractérisé en ce que, entre deux autres dispositifs émetteurs-récepteurs (5, 6) qui sont reliés en permanence à la ligne (3), le dispositif (4) contient un circuit logique recevant les signaux de commande avec des moyens (8, 9, 10, 11) destinés à l'obtention de signaux pour l'inhibition du mode récepteur de l'autre dispositif émetteur-récepteur (5, 6) fonctionnant respectivement en mode émetteur à partir des signaux de réception de l'autre dispositif émetteur-récepteur (5,6) fonctionnant respectivement en mode récepteur.

2. Dispositif selon la revendication 1, caractérisé en ce que le circuit logique contient deux logiques ET (8, 9) dont les sorties sont reliées individuellement à une entrée de réception (12, 13) de l'un des autres dispositifs émetteurs-récepteurs (5, 6) associés, alors qu'une première entrée (16, 17) de chaque logique ET (8, 9) est reliée à la sortie d'émission de l'autre dispositif émetteur-récepteur (5, 6) non associé, une deuxième entrée (14, 15) de chacune des logiques ET (8, 9) est par contre reliée à la sortie de l'autre logique ET (8, 9) respective par l'intermédiaire d'une temporisation de coupure (10, 11), et des troisièmes entrées (20, 21) des deux logiques ET (8, 9) recevant les signaux de commande.
